# EUROPÄISCHE PATENTANMELDUNG

(11) **EP 2 484 486 A1**
(43) Veröffentlichungstag der Anmeldung: **08.08.2012**
(21) Anmeldenummer: 11000972.7
(22) Anmeldetag: 03.02.2011
(51) Int. Cl.: B23Q 11/10, B23B 27/10

(54) **System aus Werkzeugaufnahme und verstellbaren Werkzeug mit interner Kühlschmiermediumzufuhr**

(71) Anmelder: ALEIT GmbH, 35239 Steffenberg (DE)
(72) Erfinder: Aleit, Holger, 35239 Steffenberg (DE)
(74) Vertreter: Wolff, Felix

(57) **Zusammenfassung**

System aus einer Werkzeugaufnahme (100) und einem Werkzeug (300), wobei die Werkzeugaufnahme (100) eine Kühlschmiermediumzufuhrung (104) und eine Kühlschmiermediumübergabe (105), die durch einen Kühlschmiermediumkanal (102) mit der Kühlschmiermediumzuführung (104) verbunden ist, aufweist, dadurch gekennzeichnet, dass die Kühlschmiermediumübergabe (105) in eine Kühlschmiermediumnut (301) im Werkzeug (300) mündet, wobei von der Kühlschmiermediumnut (301) aus durch mindestens eine Bohrung das Kühlschmiermedium in den Bereich der Wirkstelle einbringbar ist und dort zielgerichtet auf die Wirkstelle durch mindestens einen auswechselbaren düsenartigen Einsatz (303) austritt.

## Beschreibung

Die Erfindung betrifft ein System aus einer Werkzeugaufnahme und einem Werkzeug, wobei die Werkzeugaufnahme eine Kühlschmiermediumzuführung und eine Kühlschmiermediumübergabe, die durch einen Kühlschmiermediumkanal mit der Kühlschmiermediumzuführung verbunden ist, aufweist.

Solche Systeme bzw. Werkzeugaufnahmen sind allgemein, beispielsweise aus der Druckschrift DE 84 24 074 U1, bekannt.

Aus der Druckschrift DE 84 24 074 U1 ist eine Werkzeugaufnahme bekannt, bei der Kühlschmierstoff durch eingebrachte Kanäle in das Werkzeug eingebracht wird. Durch weitere eingebrachte Kanäle tritt der Kühlschmierstoff mit Ausrichtung auf die Wirkstelle durch eine separate Klemme aus.

Nachteilig bei dieser Zuleitung ist, dass die Ausspannlänge des Werkzeugs durch die Position der Übergabebohrungen, zwischen Werkzeughalter und Werkzeug, festgelegt ist. Somit steht bei einer Änderung der Ausspannlänge kein Kühlschmierstoff an der Wirkstelle zur Verfügung. Ein weiterer Nachteil ist, dass bei ausgebautem Werkzeug Kühlschmierstoff aus der Übergabebohrung austritt und somit der Versorgungsdruck der gesamten Kühlschmierstoffversorgung in der Maschine sinkt. Des Weiteren ist eine Klemme als zusätzliches Bauteil zur Zuführung des Kühlschmiermediums unbedingt notwendig.

Es war deshalb die Aufgabe der vorliegenden Erfindung, eine Werkzeugaufnahme mit verstellbarem Werkzeug zur Verfügung zu stellen, die die Nachteile des Standes der Technik nicht aufweist.

Gelöst wird die Aufgabe durch ein System aus einer Werkzeugaufnahme und einem Werkzeug, wobei die Werkzeugaufnahme eine Kühlschmiermediumzuführung und eine Kühlschmiermediumübergabe, die durch einen Kühlschmiermediumkanal mit der Kühlschmiermediumzuführung verbunden ist, aufweist, wobei die Kühlschmiermediumübergabe in eine Kühlschmiermediumnut im Werkzeug mündet, wobei von der Kühlschmiermediumnut aus durch mindestens einen Kanal das Kühlschmiermedium in den Bereich der Wirkstelle einbringbar ist und dort zielgerichtet auf die Wirkstelle durch mindestens einen Kanal, bevorzugt durch einen auswechselbaren düsenartigen Einsatz, austritt. Durch den Einbau der Düsen kann der Querschnitt der Austrittsöffnung auf kostengünstige Weise geändert werden, wodurch eine optimale Einstellung auf die Art des zugeführten Kühlschmiermedium (KSM), z.B. MMS, möglich ist. Jedoch sind keine Anbauteile für die Zuführung des Kühlschmiermediums erforderlich, d.h. es werden keine den Zerspanungsprozess behindernden Extensionen geschaffen, die ggf. auch durch die Zerspanung beschädigt oder umgelenkt werden könnten.

Die Erfindung betrifft ein System aus einer Werkzeugaufnahme und einem Werkzeug (beispielsweise ein Drehmeißel) mit einem Schneidmittel (beispielsweise eine Wendeschneidplatte) zur materialabtragenden Bearbeitung eines Werkstücks. Die Werkzeugaufnahme wird von einer Werkzeugmaschine (beispielsweise eine Drehmaschine) aufgenommen. Das zu bearbeitende Werkstück muss an der Wirkstelle, d.h. im Bereich des Schneideingriffs des Schneidmittels in dem Werkstück, gekühlt und/oder geschmiert werden. Zur Kühlung bzw. Schmierung dient ein Kühlschmiermedium, welches jedes beliebige Kühlschmiermedium oder Aerosol sein kann, das schmiert und/oder kühlt. Das Kühlschmiermedium gelangt von einem Versorgungssystem aus durch Zuleitungskanäle in der Werkzeugaufnahme und im Werkzeug hin zu Austrittsöffnungen im Bereich der Wirkstelle.

Das erfindungsgemäße System kann beliebig erweitert werden. So kann in die Werkzeugaufnahme eine weitere Werkzeugaufnahme eingesetzt werden, in die dann das Werkzeug eingesetzt wird. Die Zufuhr des KSM an das Werkzeug und die Wirkstelle, erfolgt dann von Werkzeugaufnahme zu Werkzeugaufnahme, wie beschrieben. Darüber hinaus ist es möglich, die Austrittsöffnung in einer der Werkzeugaufnahmen einzubringen, insbesondere dann, wenn sich diese im Bereich der Wirkstelle befindet.

Das erfindungsgemäße System aus einer Werkzeugaufnahme und einem Werkzeug hat gegenüber dem Stand der Technik den Vorteil, dass das Kühlschmiermedium zielgerichtet an die Wirkstelle gebracht werden kann und dabei ein definierter und verstellbarer Ausspannbereich für das Werkzeug realisierbar ist. Der Ausspannbereich ist derjenige Bereich, in dem das Werkzeug im Aufnahmebereich der Werkzeugaufnahme mit KSM versorgt und verstellt werden kann. Dieser Vorteil war für den Fachmann überaus erstaunlich und nicht zu erwarten, weil insbesondere bei Werkzeugaufnahme mit verstellbarem Werkzeug die direkte Versorgung der für die Abtragung wichtigsten Bereiche mit Kühlschmiermedium problematisch ist. Durch die Erfindung ist es möglich, die Versorgung der Wirkstelle mit Kühlschmiermedium bei verstellbarem Ausspannbereich des Werkzeuges zu realisieren, ohne zusätzliche Einstellung der KSM-Versorgung.

Erfindungsgemäß oder gemäß einer weiteren bevorzugten Ausführungsform weist die Werkzeugaufnahme ein Ventil, bevorzugt ein Rückschlagventil, auf, welches durch Einsetzen des Werkzeugs betätigbar ist. Dadurch ist es vorteilhaft möglich, dass kein Druckverlust des Versorgungssystems auftritt, wenn das Werkzeug ausgebaut ist.

Der definierte Ausspannbereich des erfindungsgemäßen Systems wird vorzugsweise durch eine Nut im Werkzeug oder der Werkzeugaufnahme ermöglicht, die das Gegenstück der Versorgungsbohrung im Werkzeughalter oder dem Werkzeug darstellt. Die Weiterleitung des Kühlschmiermediums erfolgt durch im Werkzeug eingebrachte Kanäle, die in der Nähe der Wirkstelle münden. Aus einer Bohrung oder bevorzugt einer Düse, die bevorzugt austauschbar ist, wird das Kühlschmiermedium zielgerichtet auf die Wirkstelle gebracht. Bevorzugt kann durch die Einsatzmöglichkeit verschiedener Düsendurchmesser die Fluid- bzw. Aerosolzufuhr individuell an die Bearbeitungsaufgabe angepasst werden. Da die Zuführung des Kühlschmiermediums nicht von einer Klemme, die als Befestigung eines Schneidenkörpers dient, abhängig ist, kann jede beliebige Befestigung für Schneidkörper eingesetzt werden, ohne die Kühlschmiermediumversorgung zu beeinflussen. Durch das in den Werkzeughalter eingebrachte Ventil, das durch den Einbau des Werkzeugs automatisch öffnet, solange der definierte Ausspannbereich eingehalten wird, ist es möglich, das Werkzeug auszubauen und - ohne die Versorgungsbohrung im Werkzeughalter manuell verschließen zu müssen und/oder ohne unnötigen und ungewünschten Druckverlust in der Anlage - die Maschine weiter zu betreiben. Dies verringert die Rüstzeiten erheblich, sodass die Fertigungskosten wesentlich gesenkt werden.

Die konstruktive Gestaltung des Werkzeughalters und des Werkzeugs ermöglichen zum einen den Einsatz herkömmlicher Werkzeuge in Kombination mit dem modifizierten Werkzeughalter und zum anderen den Einsatz eines modifizierten Werkzeugs in Kombination mit einem herkömmlichen Werkzeughalter.

Bevorzugt sind alle Arten von Schnittstellen zwischen Werkzeughalter und Werkzeugmaschine, wie beispielsweise PSC, HSK, TS, VDI, Steilkegel, Weldon usw. möglich. Die Zuführung des Kühlschmiermediums ist an jeder beliebigen Stelle des Werkzeughalters möglich.

In Mehrfachaufnahmen werden beispielsweise nur ein ― oder bevorzugt mehrere Werkzeuge gleichzeitig ― eingesetzt, hier kommt der Verschluss des Kühlschmiermedienzugangs zum Tragen

Bevorzugt ist mindestens ein Werkzeug in einem Verstellbereich der Ausspannlänge nach verstellbar und die Kühlschmiermediumversorgung der Wirkstelle ist in diesem Verstellbereich durch die Kühlschmiermediumnut im Werkzeug oder der Werkzeugaufnahme gewährleistet.

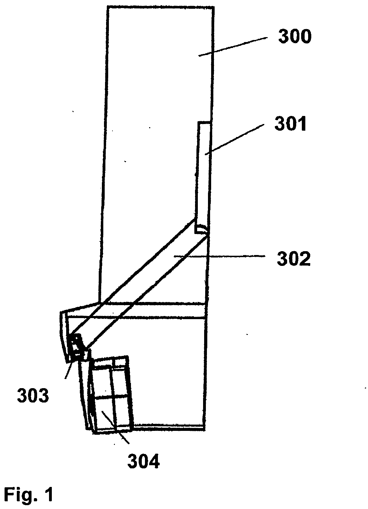

Die Erfindung wird in den folgenden Figuren 1 bis 11 schematisch dargestellt und dadurch beispielhaft erläutert. Diese Erläuterungen sind lediglich beispielhaft und schränken den allgemeinen Erfindungsgedanken nicht ein. Die Erläuterungen gelten für alle Gegenstände der vorliegenden Erfindung.

Es zeigen:
**Figuren 1 bis 4** schematische Darstellungen eines Drehmeißels zur Verwendung in einem erfindungsgemäßen System und
**Figuren 5 bis 11** schematische Darstellungen von beispielhaften Ausführungsformen des erfindungsgemäßen Systems.

In den verschiedenen Figuren sind gleiche Teile stets mit dem gleichen Bezugszeichen versehen und werden daher in der Regel auch jeweils nur einmal benannt bzw. erwähnt.

In **Figur 1** ist ein Werkzeug 300 zur Verwendung in einem erfindungsgemäßen System schematisch abgebildet. Bei diesem Werkzeug 300 handelt es sich beispielhaft um einen Drehmeißel. Das Werkzeug 300 weist eine Kühlschmiermediumnut 301 auf. Von der Kühlschmiermediumnut 301 erstreckt sich ein Kühlschmiermediumdurchführkanal 302 hin zu einer Kühlschmiermediumaustrittsöffnung, in die eine Düse 303 eingebracht ist. Die Düse 303 ist beispielswiese in die Kühlschmiermediumaustrittsöffnung eingeschraubt. Vor der Düse 303 befindet sich das Schneidwerkzeug, bei dem es sich beispielsweise um eine auswechselbare Schneidplatte handelt. Beim Betrieb der Drehmaschine wird das Kühlschmiermedium über die Werkzeugaufnahme in die Kühlschmiermediumnut 301 eingebracht. Das Kühlschmiermedium wird über den Kühlschmiermediumdurchführkanal 302 zur Düse 303 geleitet. Das Kühlschmiermedium wird durch die Düse 303 direkt auf den Schneideingriff gespritzt.

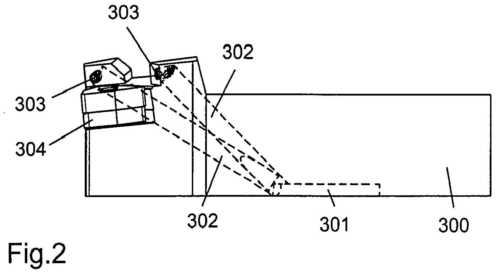

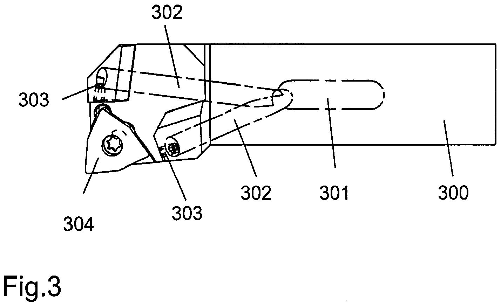

In den **Figuren 2** **und** **3** ist ein weiteres Werkzeug 300 schematisch abgebildet. Figur 2 zeigt eine Seitenansicht und Figur 3 zeigt eine Aufsicht auf das Werkzeug 300. Das Werkzeug 300 weist in dieser Ausführungsform zwei von der Kühlschmiermediumnut 301 ausgehende Kühlschmiermediumdurchführkanäle 302 und zwei Düsen 303 auf. Durch diese zwei Düsen 303 ist ein verbessertes Aufspritzen des Kühlschmiermediums von zwei Seiten auf den Schneideingriff möglich. Im Übrigen wird auf die Ausführungen zur Figur 1 verwiesen

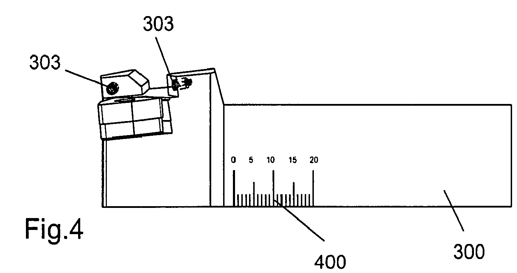

In **Figur 4** ist ein weiteres Werkzeug 300 schematisch abgebildet. Das Werkzeug 300 weist eine Skala 400 auf, die beispielsweise in das Werkzeug 300 geprägt ist. Mittels dieser Skala 400 ist auf einfache Art und Weise die Einbautiefe des Werkzeuges 300 in die Werkzeugaufnahme ablesbar. Innerhalb des Verstellbereichs der Skala wird das Werkzeug mit Kühlschmiermedium versorgt. Im Übrigen wird auf die Ausführungen zur Figur 1 verwiesen

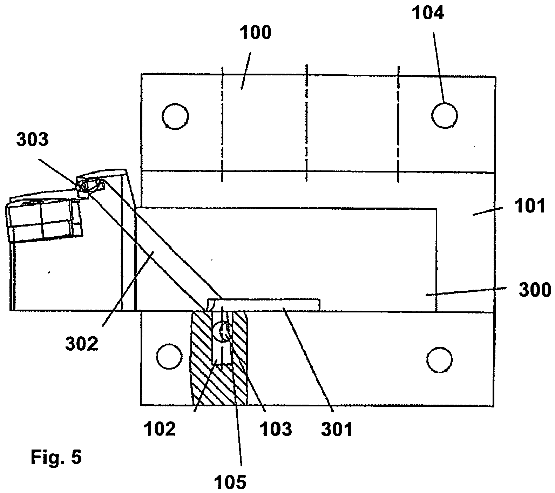

In **Figur 5** ist eine Ausführungsform des erfindungsgemäßen Systems schematisch dargestellt (Befestigungsmittel nicht dargestellt). Eine Werkzeugaufnahme 100 ist beispielhaft mit einer Drehmaschine fest verbindbar. Die Werkzeugaufnahme 100 weist einen Aufnahmebereich 101 zur Aufnahme des Werkzeugs 300 auf. Weiterhin weist die Werkzeugaufnahme 100 einen Kühlschmiermediumkanal 102, der über hier nicht dargestellte Kanäle mit einer der beispielhaft dargestellten Kühlschmiermediumzuführung 104 im Bereich 103 verbunden ist und eine Kühlschmiermediumübergabe 105 auf. Die Kühlschmiermediumzuführung 104 ist beispielsweise mit einem Vorratsbehälter oder einem Umwälzsystem für einen Kühlschmiermediumkreislauf anschließbar. Dies kann beispielsweise über die üblichen Übergabestellen aller gebräuchlichen Werkzeuganschlüsse, wie z.B. die genormten HSK, PSC, TS, VDI usw., geschehen. Das Kühlschmiermedium gelangt über den Kühlschmiermediumkanal 102 und die Kühlschmiermediumübergabe 105 in die Kühlschmiermediumnut 301 des Werkzeuges 300. Über den Kühlschmiermediumdurchführkanal 302 gelangt das Kühlschmiermedium zu der optionalen Düse 303, aus der das Kühlschmiermedium zielgerichtet in den Schneideingriff gespritzt werden kann.

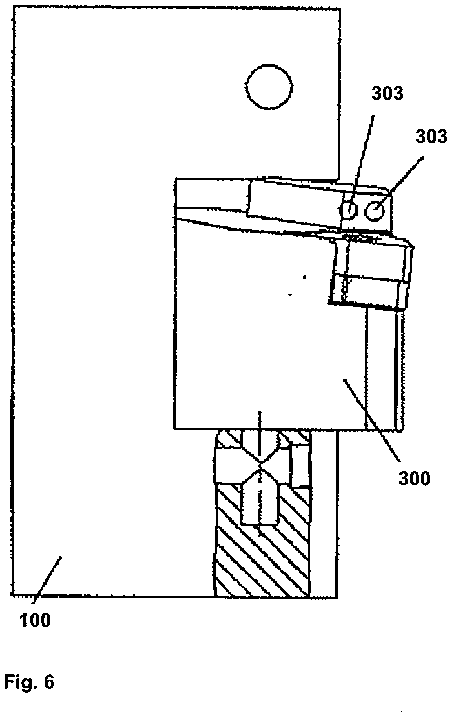

In **Figur 6** ist eine weitere Ausführungsform des erfindungsgemäßen Systems schematisch dargestellt. Das Werkzeug 300 weist im Vergleich zu Figur 5 zwei optionale Düsen 303 auf, sodass ein verbessertes Aufspritzen des Kühlschmiermediums von zwei Seiten auf den Schneideingriff möglich ist. Im Übrigen wird auf die Ausführungen zur Figur 5 verwiesen.

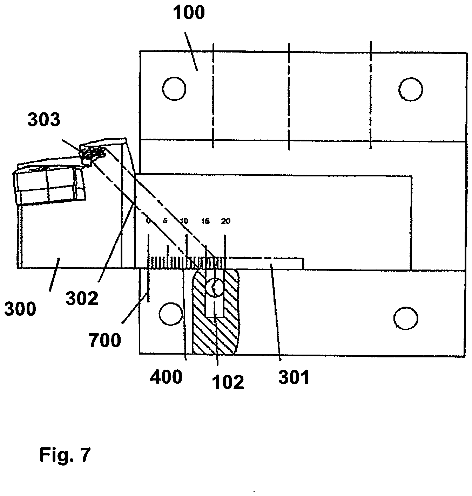

In **Figur 7** ist eine weitere Ausführungsform des erfindungsgemäßen Systems schematisch dargestellt. Das Werkzeug 300 weist im Vergleich zu Figur 5 die Skala 400 auf. Zusätzlich weist die Werkzeugaufnahme 100 eine Ablesemarkierung 700 auf. Mittels dieser Skala 400 und der Ablesemarkierung 700 ist auf einfache Art und Weise der Verstellbereichs des Werkzeugs 300, in dem die Versorgung mit dem Kühlschmiermedium in der Werkzeugaufnahme 100 gewährleistet ist, ablesbar. Im Übrigen wird auf die Ausführungen zur Figur 5 verwiesen

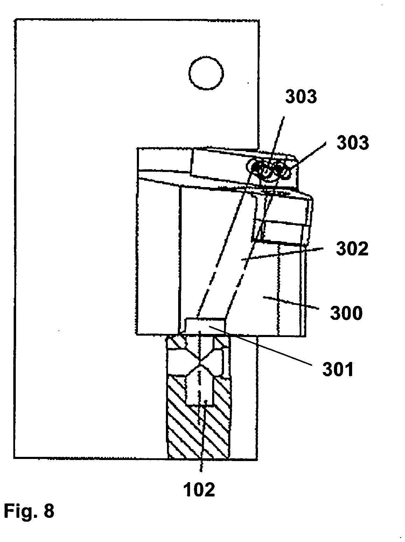

In **Figur 8** ist eine weitere Ausführungsform des erfindungsgemäßen Systems schematisch dargestellt. Das Werkzeug 300 weist zwei optionale Düsen 303 bei nur einem Kühlschmiermediumdurchführkanal 302 auf. Dadurch ist eine einfachere Herstellung des Werkzeugs 300 möglich. Im Übrigen wird auf die Ausführungen zur Figur 5 verwiesen.

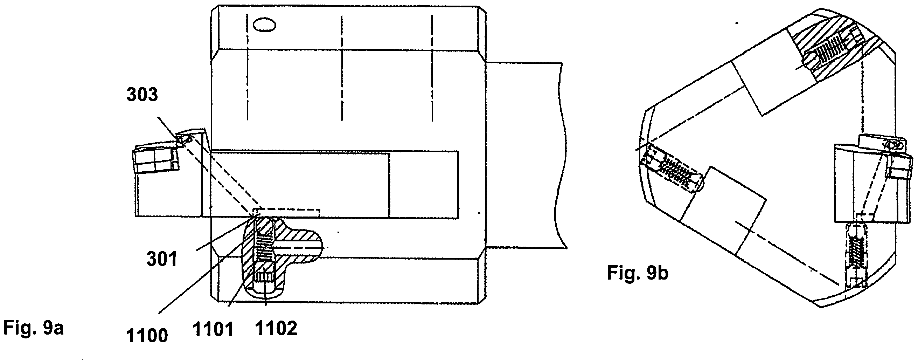

In den **Figuren 9a** und **9b** ist eine weitere Ausführungsform des erfindungsgemäßen Systems in zwei Ansichten schematisch dargestellt. Die Werkzeugaufnahme weist ein Ventil 1102 auf, welches eine Verschließfeder 1101 und einen Verschließkörper 1100 aufweist. Bei Entnahme des Werkzeugs 300 verschließt das Ventil 1102 die Kühlschmiermediumaustrittsöffnung der Werkzeugaufnahme, sodass der Kühlschmiermitteldruck in der Versorgungsanlage nicht abfällt. Im Übrigen wird auf die Ausführungen zur Figur 5 verwiesen.

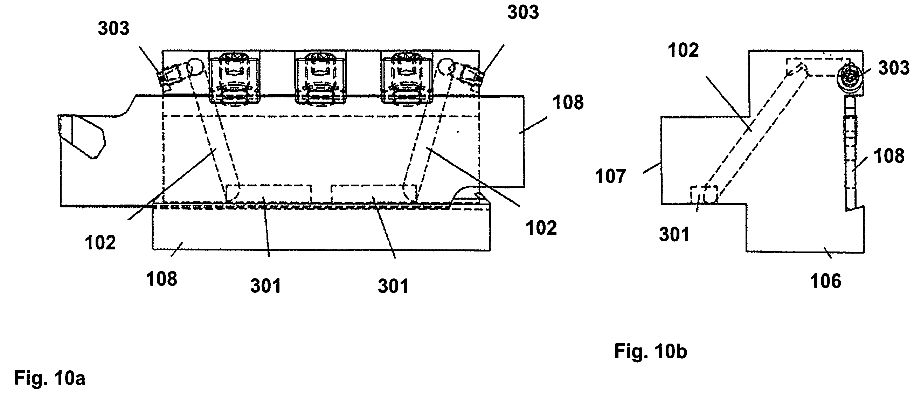

In den **Figuren 10a** und **10b** ist eine weitere Ausführungsform des erfindungsgemäßen Systems schematisch in zwei Ansichten dargestellt. Die Werkzeugaufnahme (106) weist einen Werkzeuganschluss (107) auf, der wie die beschriebenen Werkzeuge (300) in den beschriebenen Werkzeugaufnahmen (100) eingesetzt werden kann.

In die Werkzeugaufnahme (106) kann beispielsweise, wie hier dargestellt, ein Stechschwert (108) als Werkzeug eingesetzt werden. Der KSM-Austritt erfolgt über eine Düse (303), die in die Werkzeugaufnahme (106) eingebracht ist und auf die Wirkstelle zielt.

Die Werkzeugaufnahme (106) stellt die KSM-Nut (301), den KSM-Kanal (102) und die Düse (303) in zweifacher Ausführung spiegelbildlich zueinander zur Verfügung. Dies führt dazu, dass die Werkzeugaufnahme (106) in einer spiegelbildlichen Ausführung der Werkzeugaufnahme (100) eingesetzt werden kann, so dass dort dann die zweite Seite der KSM-Versorgung genutzt werden kann, wenn das Stechschwert (108) gedreht verwendet wird.

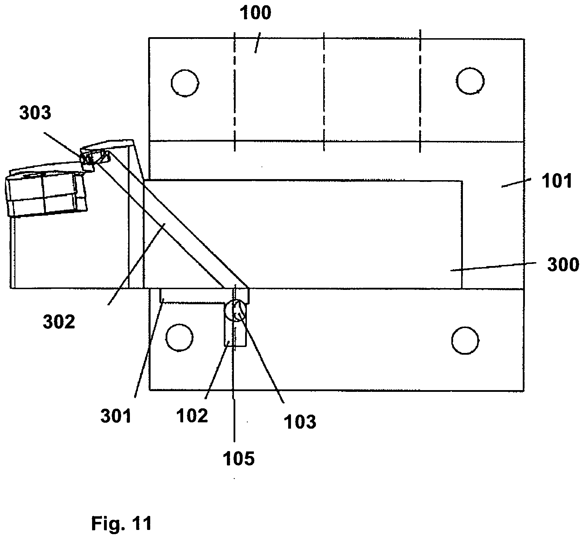

In **Figur 11** ist eine weitere Ausführungsform des erfindungsgemäßen Systems schematisch dargestellt. Im Vergleich zur Figur 5 ist die Kühlschmiermediumnut (301) hier in dem Werkzeughalter (100) eingebracht. Im Übrigen wird auf die Ausführung zur Figur 5 verwiesen.

### Bezugszeichenliste

- 100, 106: Werkzeugaufnahme
- 101: Aufnahmebereich der Werkzeugaufnahme
- 102: Kühlschmiermediumkanal in der Werkzeugaufnahme
- 103: Bereich mit zwei weiteren Austrittsöffnungen
- 104: Kühlschmiermediumzuführung in der Werkzeugaufnahme
- 105: Kühlschmiermediumübergabe in der Werkzeugaufnahme
- 300: Werkzeug, insb. Drehmeißel
- 301: Kühlschmiermediumnut des Werkzeugs
- 302: Kühlschmiermediumdurchführkanal des Werkzeugs
- 303: Düse
- 304: Schneidwerkzeug
- 400: Skala
- 700: Ablesemarkierung
- 1100: Verschließkörper
- 1101: Verschließfeder
- 1102: Ventil
- 107: Werkzeuganschluss
- 108: Stechschwert

## Patentansprüche

1. System aus einer Werkzeugaufnahme (100) und einem Werkzeug (300), wobei die Werkzeugaufnahme (100) eine Kühlschmiermediumzuführung (104) und eine Kühlschmiermediumübergabe (105), die durch einen Kühlschmiermediumkanal (102) mit der Kühlschmiermediumzuführung (104) verbunden ist, aufweist, **dadurch gekennzeichnet, dass** die Kühlschmiermediumübergabe (105) in eine Kühlschmiermediumnut (301) im Werkzeug (300) mündet, wobei von der Kühlschmiermediumnut (301) aus durch mindestens eine Bohrung das Kühlschmiermedium in den Bereich der Wirkstelle einbringbar ist und dort zielgerichtet auf die Wirkstelle durch mindestens einen auswechselbaren düsenartigen Einsatz (303) austritt.

2. System nach Anspruch 1 oder nach dem Oberbegriff des Anspruchs 1, **dadurch gekennzeichnet, dass** die Werkzeugaufnahme (100) ein Ventil (1102) aufweist, welches durch Einsetzen des Werkzeugs (300) betätigbar ist.

3. System nach einem der vorhergehenden Ansprüche, **dadurch gekennzeichnet, dass** als Schnittstelle zwischen der Werkzeugaufnahme (100) und einer Werkzeugmaschine alle Anschlussarten wie beispielsweise PSC, HSK, TS, VDI, Steilkegel oder Weldon möglich sind.

4. System nach einem der vorhergehenden Ansprüche, **dadurch gekennzeichnet, dass** ein oder mehrere Werkzeuge (300), auch gleichzeitig, in der Werkzeugaufnahme (100) aufnehmbar sind.

5. System nach einem der vorhergehenden Ansprüche, **dadurch gekennzeichnet, dass** mindestens ein Werkzeug (300) in einem Verstellbereich der Ausspannlänge nach verstellbar ist und die Kühlschmiermediumversorgung der Wirkstelle in diesem Verstellbereich durch die Kühlschmiermediumnut (301) im Werkzeug (300) gewährleistet ist.
